# EUROPÄISCHE PATENTANMELDUNG

(11) **EP 2 101 095 A2**
(43) Veröffentlichungstag der Anmeldung: **16.09.2009**
(21) Anmeldenummer: 09001804.5
(22) Anmeldetag: 10.02.2009
(51) Int. Cl.: F16L 11/11, F16L 11/15

(54) **Wellschlauch aus Kunststoffmaterial zur Ummantelung von wenigstens einem Abgassensor-Kabel**

(30) Priorität: 12.03.2008 DE 202008003519 U
(71) Anmelder: Rehau Ag + Co, 95111 Rehau (DE)
(72) Erfinder: Sammet, Ulli, 95111 Rehau (DE); Müller, Jörg, 95028 Hof (DE); Ruckdäschel, Gerhard, 95163 Weißenstadt (DE); Wazlawik, Klaus, 95030 Hof (DE); Schöbel, Michael, 95100 Selb (DE)

(57) **Zusammenfassung**

Die Erfindung betrifft einen Wellschlauch (10) aus Kunststoffmaterial zur Ummantelung von wenigstens einem Abgassensor-Kabel, wobei das Kunststoffmaterial PFA umfasst.

## Beschreibung

Die Erfindung betrifft einen Wellschlauch aus Kunststoffmaterial zur Ummantelung von wenigstens einem Abgassensor-Kabel.

Abgassensoren werden zur Messung wichtiger Abgasparameter im Abgasstrom von Kraftfahrzeugen angeordnet. Das an einen Abgassensor angeschlossene elektrische Abgassensor-Kabel ist hierbei teilweise aus dem Abgasstrom herausgeführt, wobei der aus dem Abgasstrom herausgeführte Abschnitt des Abgassensor-Kabels oft zum Schutz vor hohen Temperaturen in Umgebung des Abgasstroms, die ca. 260 °C betragen können, von einer Ummantelung in Form eines Wellschlauchs umgeben ist.

Derzeit bestehen die Wellschläuche beispielsweise aus Polytetrafluorethylen (PTFE). Die Herstellung dieser bekannten Wellschläuche erfolgt durch eine Art Pressvorgang (beispielsweise Pastenextrusion und darauffolgendes Sintern oder Rammextrusion - Umformung zur Endgeometrie), was einen Vorformling, z. B. in schlauchförmiger Ausführung voraussetzt, einhergehend mit dem Erfordernis des Vorsehens von zwei getrennten, kostenintensiven Arbeitsschritten.

Der Vorformling muss zur Ausformung der Endgeometrie umgeformt werden, was dazu führen kann, dass das Fertigteil noch einen sog. Memory-Effekt inne hat, der später z.B. bei einer Wärmebeaufschlagung eine ungewollte Maßänderung bewirken kann. Auch kritisch ist bei einer zu starken Verformung, z. B. bei einem Überdehnen des Vorformlings, die Entstehung von sehr kleinen, schwer sichtbaren Löchern, die beim Einsatz des Bauteils Probleme verursachen können, derart, dass gegebenenfalls ein Gesamtsystem, wobei der Wellschlauch ein Teil dieses Gesamtsystem ist, ausfällt bzw. nicht mehr einsatzfähig ist.

Weiterhin können die fertigungstechnischen Toleranzen des "Rohlings" kaum berücksichtigt werden, so dass es zu Verquetschungen oder nicht vollständig ausgebildeten Teilbereichen kommen kann.

Der Erfindung liegt daher die Aufgabe zugrunde, einem Wellschlauch aus Kunststoffmaterial zur Ummantelung von wenigstens einem Abgassensor-Kabel anzugeben, der im Vergleich zu bekannten Wellschläuchen dieser Art mit wesentlich geringerem Aufwand und kostengünstiger hergestellt werden kann, und mit dem die bekannten herstellungstechnisch bedingten Nachteile vermieden werden können.

Diese Aufgabe ist erfindungsgemäß mit einem Wellschlauch aus Kunststoffmaterial zur Ummantelung von wenigstens einem Abgassensor-Kabel gelöst, wobei das Kunststoffmaterial PFA umfasst.

Perfluoralkoxy-Copolymer, allgemeinen als PFA bezeichnet, ist ein thermoplastischer Kunststoff mit hohem Fluorgehalt, der im Unterschied zu den bisher für bekannte Wellrohre zur Ummantelung von Abgassensor-Kabein verwendeten Kunststoff-Materialien, die Herstellung des Wellrohrs durch einen Corrugator ermöglicht, der endlos umlaufende Formbacken zur Formgebung des Wellrohrs aufweist. Die Herstellung mittels eines Corrugators erfordert keinen Vorformling. Die Extrusion und der sich anschließende Prozess des Formens sind unmittelbar nacheinander geschaltet. Die definierte Endgeometrie kann somit in nur einem Fertigungsdurchlauf erzeugt werden, einhergehend mit der Schaffung eines Ressourcen schonenden einstufigen Verfahrens ohne Rohling. Weitere Vorteile umfassen die Unabhängigkeit von der Toleranz des Rohlings und möglichen Lieferengpässen des Rohlings, Verbesserung der Ausformung der Wellengeometrie, stabile Qualität über mehrere Produktionschargen durch direkte Ausformung der Schmelze in Formbacken mit Vakuumbeaufschlagung, Vermeidung eines nachteiligen Memory-Effekts und Vermeidung der Bildung von kleinen nachteiligen, schwer sichtbaren Löchern. Ferner können Wanddicken im Bereich von ca. 0,1 mm - 0,5 mm, insbesondere ca. 0,25 mm sicher hergestellt werden, bei Innendurchmessern des Wellschlauchs im Bereich von 3 mm bis 15 mm, vorzugsweise 6 mm bis 13 mm. Es sind reversible Änderungen am Produkt durch Austausch einzelner Segmente der Formkette möglich. Schließlich ermöglicht das Corrugator-Prinzip beliebige Fixlängen im Online-Betrieb.

Insgesamt betrachtet kann der erfindungsgemäße Wellschlauch im Unterschied zu bekannten Wellschläuchen zur Ummantelung von Abgassensor-Kabeln mit wesentlich geringerem Aufwand und kostengünstiger hergestellt werden.

Bei einer vorteilhaften Weiterbildung der Erfindung weist der Wellschlauch wenigstens einen Endabschnitt aufweist, der ungewellt ausgebildet ist, wobei der Wellschlauch bevorzugt einen mittleren gewellten Abschnitt und zwei Endabschnitte aufweist, wobei die Endabschnitte ungewellt ausgebildet sind. Die ungewellten Endabschnitte können erfindungsgemäß in vorteilhafter Weise zum Anschluss des Wellschlauchs an ein geeignet ausgebildetes Anschlussstück bzw. an einen geeignet ausgebildeten Anschlussabschnitt eines Abgasrohrsystems eines Kraftfahrzeugs vorgesehen sein.

Bei einer besonders praktischen Weiterbildung weist der mittlere Abschnitt ein länglich ausgebildetes Innenvolumen mit einer größten Querschnittsfläche auf, und wenigstens einer der Endabschnitte weist ein länglich ausgebildetes Innenvolumen mit einer kleinsten Querschnittsfläche auf, die größer ist als die größte Querschnittsfläche des Innenvolumens des mittleren Abschnitts. So wird erfindungsgemäß ein aufgeweiteter Endabschnitt bereitgestellt, über den der Wellschlauch insbesondere an Anschlussabschnitte mit großem Innendurchmesser bzw. Außendurchmesser angeschlossen werden kann. Besonders bevorzugt ist es, wenn das Verhältnis der Größe der kleinsten Querschnittsfläche des Innenvolumens des Endabschnitts zu der Größe der größten Querschnittsfläche des Innenvolumens des mittleren Abschnitts 1,5 bis 1,6 beträgt.

Erfindungsgemäß kann der Wellschlauch schwarz, naturfarbig oder grau ausgebildet sein, vorzugsweise auch in Abstufungen. Auch andere Farben sind erfindungsgemäß vorgesehen. Der Wellschlauch kann erfindungsgemäß insbesondere auch als mechanischer Knickschutz und/oder Scheuerschutz vorgesehen sein und/oder auch als Schutzelement zum Schutz gegen aggressive Medien und/oder als Abschirmungselement zur isolierenden Abschirmung eines vorgegebenen Bereichs.

Nachfolgend werden Ausführungsbeispiele der Erfindung anhand der beigefügten Zeichnungen näher erläutert. Es zeigt:
- Figur 1 -: eine Schnitt-Darstellung eines Ausführungsbeispiels eines erfindungsgemäßen Wellschlauchs, und

- Figur 2 -: eine schematische Darstellung eines weiteren Ausführungsbeispiels des erfindungsgemäßen Wellschlauchs.

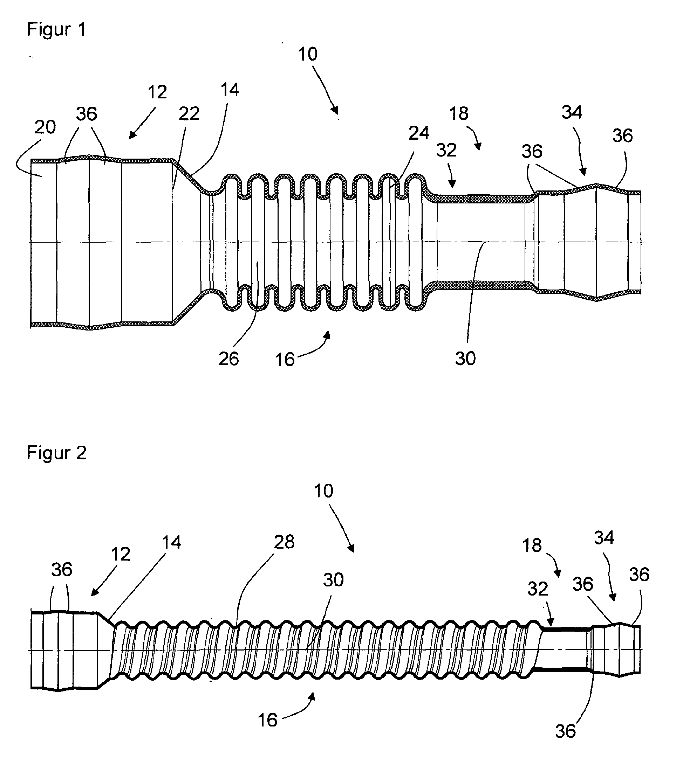

Figur 1 zeigt eine Schnitt-Darstellung eines Ausführungsbeispiels eines erfindungsgemäßen Wellschlauchs 10. Der dargestellte Wellschlauch 10 ist entlang seiner gesamten Längserstreckung rohrförmig mit kreisförmigem Querschnitt ausgebildet. Der Wellschlauch 10 weist einen linken ungewellten Endabschnitt 12, einen Übergangsabschnitt 14, einen mittleren gewellten Abschnitt 16 und einen rechten ungewellten Endabschnitt 18 auf. Der linke Endabschnitt 12 weist ein Innenvolumen 20 mit einer kleinsten Querschnittsfläche 22 (schematisch durch Linie 22 dargestellt) auf, die vorliegend ca. das 1,55-fache einer größten Querschnittsfläche 24 (schematisch durch Linie 24 dargestellt) des Innenvolumens 26 des gewellten Abschnitts 16 beträgt. Infolge der vorliegend kreisförmigen Querschnittsausbildung des Wellschlauchs 10 beträgt daher das Verhältnis des kleinsten Innendurchmessers des linken Endabschnitts 12 zu dem größten Innendurchmesser des mittleren gewellten Abschnitts 16 ca. 1,245. Der Endabschnitt 18 weist einen an den mittleren Abschnitt 16 angrenzenden ersten Teilabschnitt 32 mit entlang der gesamten Erstreckung des ersten Teilabschnitts 32 im Wesentlichen gleichbleibenden Innendurchmesser und Außendurchmesser auf. Ein an den ersten Teilabschnitt 32 angrenzender zweiter Teilabschnitt 34 umfasst Wellschlauch-Abschnitte 36, die in Richtung des rechten Endes des Wellschlauchs 10 konisch verjüngend oder konisch erweiternd ausgebildet sind. Auch der linke Endabschnitt 12 weist Wellschlauch-Abschnitte 36 auf, die in Richtung des linken Endes des Wellschlauchs 10 konisch verjüngend oder konisch erweiternd ausgebildet sind.

Figur 2 zeigt eine schematische Darstellung eines weiteren Ausführungsbeispiels des erfindungsgemäßen Wellschlauchs 10. Der hier dargestellte Wellschlauch 10 weist einen gewellten mittleren Abschnitt 16 auf, der eine zusammenhängend ausgebildete Vertiefung 28 aufweist, die in Form einer länglichen Spirale ausgebildet ist, deren Längsachse sich mit der Längsachse 30 des Wellrohrs 10 deckt. Auch hier weist der linke Endabschnitt 12 einen gegenüber den übrigen Bereichen des Wellrohrs 10 vergrößerten Innendurchmesser auf.

### Bezugszeichenliste

- 10: Wellschlauch
- 12: Endabschnitt
- 14: Übergangsabschnitt
- 16: Mittlerer Abschnitt
- 18: Endabschnitt
- 20: Innenvolumen
- 22: Querschnittsfläche
- 24: Querschnittsfläche
- 26: Innenvolumen
- 28: Vertiefung
- 30: Längsachse
- 32: Teilabschnitt
- 34: Teilabschnitt
- 36: Wellschlauch-Abschnitt

## Patentansprüche

1. Wellschlauch (10) aus Kunststoffmaterial zur Ummantelung von wenigstens einem Abgassensor-Kabel, **dadurch gekennzeichnet, dass** das Kunststoffmaterial PFA umfasst.

2. Wellschlauch (10) nach Anspruch 1, **dadurch gekennzeichnet, dass** der Wellschlauch (10) wenigstens einen Endabschnitt (12, 18) aufweist, der ungewellt ausgebildet ist.

3. Wellschlauch (10) nach Anspruch 1 oder 2, **dadurch gekennzeichnet, dass** der Wellschlauch (10) einen mittleren gewellten Abschnitt (16) und zwei Endabschnitte (12, 18) aufweist, wobei die Endabschnitte (12, 18) ungewellt ausgebildet sind.

4. Wellschlauch (10) nach Anspruch 3, **dadurch gekennzeichnet, dass** der mittlere Abschnitt (16) ein länglich ausgebildetes Innenvolumen (26) mit einer größten Querschnittsfläche (24) aufweist, und dass wenigstens einer der Endabschnitte (12, 18) ein länglich ausgebildetes Innenvolumen (20) mit einer kleinsten Querschnittsfläche (22) aufweist, die größer ist als die größte Querschnittsfläche (24) des Innenvolumens (26) des mittleren Abschnitts (16).

5. Wellschlauch (10) nach Anspruch 4, **dadurch gekennzeichnet, dass** das Verhältnis der Größe der kleinsten Querschnittsfläche (22) des Innenvolumens (20) des Endabschnitts (12, 18) zu der Größe der größten Querschnittsfläche (24) des Innenvolumens (26) des mittleren Abschnitts (16) 1,5 bis 1,6 beträgt.
